# EUROPEAN PATENT APPLICATION

(11) **EP 4 521 343 A1**
(43) Date of publication of application: **12.03.2025**
(21) Application number: 23196452.9
(22) Date of filing: 11.09.2023
(51) Int. Cl.: G06T 7/12

(54) **AUTOMATIC SEGMENTATION ENTRY TOOL CONFIGURATION**

(71) Applicant: Koninklijke Philips N.V., 5656 AG Eindhoven (NL)
(72) Inventor: FLÄSCHNER, Nick, Eindhoven (NL); EWALD, Arne, Eindhoven (NL); SCHMIDT-RICHBERG, Alexander, 5656AG Eindhoven (NL); BROSCH, Tom, Eindhoven (NL); CAROLUS, Heike, Eindhoven (NL); GESSERT, Nils Thorben, Eindhoven (NL)
(74) Representative: Philips Intellectual Property & Standards

(57) **Abstract**

Disclosed herein is a method. The method comprises: receiving (200) a three-dimensional medical image (122) and rendering (202) a cross sectional view (126) of the three-dimensional medical image on a user interface (124). The user interface comprises a segmentation entry tool (128). The method further comprises repeatedly: receiving (204) segmentation edit data (132) from the segmentation entry tool, wherein the segmentation entry tool comprises tool configuration parameters (130) configured to control how the segmentation entry tool generates segmentation edit data; collecting (206) tool use metadata (134) descriptive of use of the segmentation entry tool to enter the segmentation edit data; modifying (208) the tool configuration parameters using the tool use metadata; and constructing (210) a segmentation (136) of the three-dimensional medical image using the segmentation edit data.

## Description

### FIELD OF THE INVENTION

The invention relates to medical imaging, in particular to the segmentation of medical images.

### BACKGROUND OF THE INVENTION

There exist various imaging modalities which enable the acquisition of three-dimensional medical images which are descriptive of the internal anatomy of a subject. For example, a subject can be imaged using magnetic resonance imaging, computed tomography, positron emission tomography, and single photon emission tomography. Often times three-dimensional medical images are segmented. In segmentation, various regions of normal and/or abnormal are identified and delineated. Segmentation may be very useful for such things as tracking the growth of tumors over time or used during radiation therapy planning to control the amount of radiation delivered to different organs.

International patent application WO2017084871A1 discloses a system and a computer-implemented method are provided for segmenting an object in a medical image using a graphical segmentation interface. The graphical segmentation interface may comprise a set of segmentation tools for enabling a user to obtain a first segmentation of the object in the image. This first segmentation may be represented by segmentation data. Interaction data may be obtained which is indicative of a set of user interactions of the user with the graphical segmentation interface by which the first segmentation of the object was obtained. The system may comprise a processor configured for analyzing the segmentation data and the interaction data to determine an optimized set of user interactions which, when carried out by the user, obtains a second segmentation similar to the first segmentation, yet in a quicker and more convenient manner. A video may be generated for training the user by indicating the optimized set of user interactions to the user.

### SUMMARY OF THE INVENTION

The invention provides for a medical system, a computer program, and a method in the independent claims. Embodiments are given in the dependent claims.

In one aspect the invention provides for a medical system that comprises a memory storing machine-executable instructions. The medical system further comprises a computational system. Execution of the machine-executable instructions causes the computational system to receive a three-dimensional medical image. Execution of the machine-executable instructions further causes the computational system to render a cross-sectional view of the three-dimensional medical image on a user interface. The user interface comprises a segmentation entry tool.

Execution of the machine-executable instructions further causes the computational system to repeatedly receive segmentation edit data from the segmentation entry tool. The segmentation entry tool comprises tool configuration parameters that are configured to control how the segmentation entry tool generates segmentation edit data.

Execution of the machine-executable instructions further causes the computational system to repeatedly collect tool use metadata that is descriptive of the segmentation entry tool to enter the segmentation edit data. Execution of the machine-executable instructions further causes the computational system to repeatedly modify the tool configuration parameters using the tool use metadata. Execution of the machine-executable instructions further causes the computational system to repeatedly construct a segmentation of the three-dimensional medical image using the segmentation edit data.

In another aspect, the invention provides for a computer program that comprises machine-executable instructions for execution by a computational system. Execution of the machine-executable instructions causes the computational system to receive a three-dimensional medical image. Execution of the machine-executable instructions further causes the computational system to render a cross-sectional view of the three-dimensional medical image on a user interface. The user interface comprises a segmentation entry tool. Execution of the machine-executable instructions further causes the computational system to repeatedly receive segmentation edit data from the segmentation entry tool.

The segmentation entry tool comprises tool configuration parameters that are configured to control how the segmentation entry tool generates segmentation edit data. Execution of the machine-executable instructions further causes the computational system to repeatedly collect tool use metadata that is descriptive of the use of the segmentation entry tool to enter the segmentation edit data. Execution of the machine-executable instructions further causes the computational system to repeatedly modify the tool configuration parameters using the tool use metadata. Execution of the machine-executable instructions further causes the computational system to repeatedly construct a segmentation of the three-dimensional medical image using the segmentation edit data.

In another aspect, the invention provides for a method. The method comprises receiving a three-dimensional medical image. The method further comprises rendering a cross-sectional view of the three-dimensional medical image on a user interface. The user interface comprises a segmentation entry tool.

The method further comprises repeatedly receiving segmentation edit data from the segmentation entry tool. The segmentation entry tool comprises tool configuration parameters that are configured to control how the segmentation entry tool generates the segmentation edit data. The method further comprises repeatedly collecting tool use metadata that is descriptive of the use of the segmentation entry tool to enter the segmentation edit data. The method further comprises repeatedly modifying the tool configuration parameters using the tool use metadata. The method further comprises repeatedly constructing a segmentation of the three-dimensional medical image using the segmentation edit data.

### BRIEF DESCRIPTION OF THE DRAWINGS

In the following preferred embodiments of the invention will be described, by way of example only, and with reference to the drawings in which:
Fig. 1 illustrates an example of a medical system.
Fig. 2 shows a flow chart which illustrates a method of using the medical system of Fig. 1.
Fig. 3 illustrates a further example of a medical system.
Fig. 4 shows a flow chart which illustrates a method of using the medical system of Fig. 3.
Fig. 5 illustrates the construction of a sub-image 500 from the cross-sectional view 126.
Fig. 6 illustrates an example of an image processing neural network 600.
Fig. 7 illustrates an example of when the tool size of a segmentation entry tool is changed.

### DETAILED DESCRIPTION OF EMBODIMENTS

Like numbered elements in these figures are either equivalent elements or perform the same function. Elements which have been discussed previously will not necessarily be discussed in later figures if the function is equivalent.

Examples may be beneficial because they may provide for a user interface which automatically adapts to the needs of the user entering the segmentation edit data or controlling the segmentation entry tool. Normally, when a person is entering a manual segmentation of a three-dimensional medical image it may be quite laborious to change between the different tools and/or tool settings. Depending upon how the segmentation entry tool is being used, the behavior of it changes by using the tool use metadata to automatically modify the tool configuration parameters.

The three-dimensional medical image may for example be a three-dimensional dataset or it may be a stack of two-dimensional medical images.

In many medical imaging techniques such as magnetic resonance imaging or computed tomography two-dimensional slabs representing a thickness of the subject are repeatedly acquired. These may be used to form a three-dimensional medical image.

The segmentation entry tool configuration parameters may contain such data such as the property of the segmentation entry tool as well as various properties such as the amount or size of the area of the segmentation that is affected. Various types of segmentation entry tools may be specified such as a painting tool which is used to manually enter the location of a segmentation as well as to provide for a means of modifying or making additions to a segmentation. In some examples the segmentation may be a collection of lines or regions represented in different cross-sectional views of the three-dimensional medical image. In other examples the segmentation may be a mesh which is specified in the three-dimensional space within the three-dimensional medical image. The segmentation entry tool could for example be used to modify, stretch or deform this mesh.

In another example, the tool configuration parameters comprise a tool size. A tool size as used herein may encompass an area or volume that is affected by a segmentation entry tool. For example, the segmentation entry tool could be used to paint or fill a region and the tool size could indicate how big the segmentation line or the area which is painted or filled in is. In other examples the segmentation entry tool could be a ball or other device which is used to push or displace a three-dimensional mesh which is used to represent the segmentation. The size of the tool used to push or deform the mesh would affect how rapidly and how big of an area is edited.

In another example the memory further stores an edge detection algorithm. Execution of the machine-executable instructions further causes the computational system to determine an edge density within the cross-sectional view within a predetermined edge detection distance from the segmentation entry tool using the edge detection algorithm. The tool use metadata comprises the edge density. Execution of the machine-executable instructions further causes the computational system to adjust the tool size proportional to a change in the edge density as the segmentation entry tool is moved through the cross-sectional view.

The edge detection algorithm may for example be implemented in different ways. An algorithm can be done algorithmically such that it looks at abrupt changes in contrast or other image properties. In other examples a neural network may be trained to identify edges within the predetermined distance around the segmentation entry tool. The edge density may be used to express such quantities as the portion of the predetermined edge detection distance from the segmentation entry tool as filled with edges that are detected or it may used to determine how convoluted or how much folding takes place within the predetermined edge detection distance from the segmentation entry tool. In either case it is relatively straightforward to determine this edge density and the edge density may be a very good indicator of how large the tool size should be. For example, if there is a very fine and detailed amount of changes in the edge, it may be beneficial to use a smaller segmentation entry tool. However, if the edge density is very small and it is essentially a straight line, then it may be beneficial to use a larger tool size such that it does not require as much labor to modify or smooth or position the segmentation.

In another example the memory further stores an image processing neural network. The image processing neural network is configured to output a tool size prediction in response to receiving a sub-image selected from the cross-sectional view. The sub-image may for example be an image which is centered at a location of the segmentation entry tool. Execution of the machine-executable instructions further causes the computational system to generate the sub-image by selecting a region of the cross-sectional view that is located within a predetermined distance of the location of the segmentation entry tool within the cross-sectional view. Execution of the machine-executable instructions further causes the computational system to receive the tool size prediction in response to inputting the sub-image into the image processing neural network. Execution of the machine-executable instructions further causes the computational system to modify the tool configuration parameter such that the tool size is set to the tool size prediction.

This embodiment may be beneficial because the image processing neural network will be used to select the tool size of the segmentation entry tool automatically.

The image processing neural network may for example be a U-Net, a ResNet, or other neural network which is suitable for processing images such as a convolutional neural network or a neural network with fully connected layers. The image processing neural network may for example be trained by selecting data and noting when the operator of the medical system changes tool size manually. This can be used to generate training data. For example, when a tool size is changed the image and the location of the segmentation entry tool can be saved. This can be used to collect pairs of data which can be used to form training data for training the image processing neural network.

In another example, the tool use metadata comprises a segmentation tool speed. This may for example be the speed of the segmentation entry tool within the cross-sectional view. Execution of the machine-executable instructions further causes the computational system to adjust the tool size such that changes in the tool size are proportional to changes in the segmentation tool speed and/or automatically smooth the segmentation when the segmentation tool speed is above a predetermined threshold.

In a simple example, this may realized by measuring the speed of the mouse cursor or segmentation entry tool and and using a rule-based algorithm which linearly increases the brush size with the velocity of the mouse cursor, e.g., brush size = (1 + step_function(velocity)*slope*velocity) voxels whereas the step _function ensures the size is only increased once a certain mouse cursor velocity threshold is exceeded.

This may be beneficial because as the tool is moved more rapidly there may be a need to modify a greater portion of the segmentation at the same time. Conversely, if the operator is moving the segmentation entry tool more slowly there may be a desire to perform more or finer adjustments to the segmentation.

In another example, execution of the machine-executable instructions further causes the computational system to detect repetitive motion of the segmentation entry tool using the tool use metadata. For example, if the segmentation entry tool is moved in a back and forth manner or moved repeatedly over the same voxels or adjacent voxels this may indicate that the user is performing relative edits of a same region or very close regions. Execution of the machine-executable instructions further causes the computational system to increase the size of the segmentation entry tool in response to detecting the repetitive motion of the segmentation entry tool. For example, if an operator is using a ball type tool to distort the boundary of the segmentation then increasing the tool size will reduce the need for the repetitive motion. Increasing the size of the segmentation entry tool automatically may have the benefit of reducing the amount of work or number of motions necessary by the subject to edit or enter the segmentation.

The repetitive motion could for example be detected by determining if repetitive movement patterns are present, e.g., continuous "back-and-forth", motion which - if detected - also leads to an increase of the brush size as it indicates that larger, unstructured areas, are painted. The detection of these patterns can, e.g., be realized via a Fourier transform of the velocity as a function of time. Repetitive movements would then occur as frequency peaks.

In another example the segmentation is a three-dimensional mesh. The segmentation entry tool is configured to perform any one of the following: to push the three-dimensional mesh, to distort the three-dimensional mesh, or draw points in three-dimensional mesh or combinations thereof.

In another example, execution of the machine-executable instructions further causes the computational system to adjust a location of the segmentation entry tool such that the segmentation entry tool remains in contact with the three-dimensional mesh when the tool size is changed. For example, if the segmentation entry tool is a ball or other shape which is used to distort or push the three-dimensional mesh reducing or increasing the tool size would mean that the tool changes location relative to the mesh. Adjusting the tool such that it remains in contact with the three-dimensional mesh could reduce the chances that the mesh is unintentionally distorted in the wrong direction.

In another example, the tool configuration parameters comprise a distance perpendicular to the cross-sectional view for which the segmentation edit data is generated.

In another embodiment, the tool configuration parameters comprise a ball size.

In another embodiment, the tool configuration parameters comprise a live-wire diameter.

In another embodiment, the tool configuration parameters comprise a point annotation size.

In another embodiment, the tool configuration parameters comprise an interactive region growing size.

In another example the memory further stores a tool configuration neural network configured to output the tool configuration parameter modifications in response to receiving the tool use metadata as input. Execution of the machine-executable instructions further causes the computational system to receive the tool configuration parameter modifications in response to inputting the tool use metadata into the tool configuration neural network. Execution of the machine-executable instructions further causes the computational system to modify the tool configuration parameters using the tool configuration parameter modifications. This embodiment may be beneficial because it may provide a means of automatically configuring the tool configuration parameters. The tool configuration neural network may for example be a U-net, a ResNet, a convolutional network, or a neural network with fully connected layers. The tool use metadata can be input into the tool configuration network by encoding it numerically. The training data can be obtained by storing the tool use metadata during use and then noting when the operator changes the tool configuration parameters manually. Pairs of this data may be saved and then used to train the tool configuration neural network.

One way of training the tool configuration neural network would be to record user specific preferences by storing the set of brush parameters a user selected at time t0 and the mouse movements from time t0 to t1 until the brush parameters are changed again by the user. By pairing the recorded mouse movements from t0 to t1 with the user selection at t0, one can train a model to predict the set of brush parameters based on the mouse movements.

In another example, execution of the machine-executable instructions further causes the computational system to record manual tool configuration parameter modifications and the tool use metadata for an operator of the medical system. Execution of the machine-executable instructions further causes the computational system to train the tool configuration neural network using the manual tool configuration parameter modifications and the tool use metadata to provide a user-specific tool configuration neural network. This embodiment may be beneficial because the system may then automatically be configured of adjusted for a particular user's preferences.

In another example, the medical imaging system further comprises a medical imaging system that is configured for imaging at least a portion of the subject. Execution of the machine-executable instructions further causes the computational system to control the medical imaging system to acquire the three-dimensional medical image. The acquired three-dimensional medical image may then be used in the above-mentioned steps to construct the segmentation.

In another example, the three-dimensional medical image is a magnetic resonance image.

In another embodiment, the three-dimensional medical image is a computed tomography image.

In another embodiment, the three-dimensional medical image is a three-dimensional ultrasound image.

In another embodiment, the three-dimensional medical image is a positron emission tomography image.

In another embodiment, the three-dimensional medical image is a single-phone emission tomography image.

In another example, execution of the machine-executable instructions further causes the computational system to provide the segmentation of the three-dimensional medical image when the construction of the segmentation is complete.

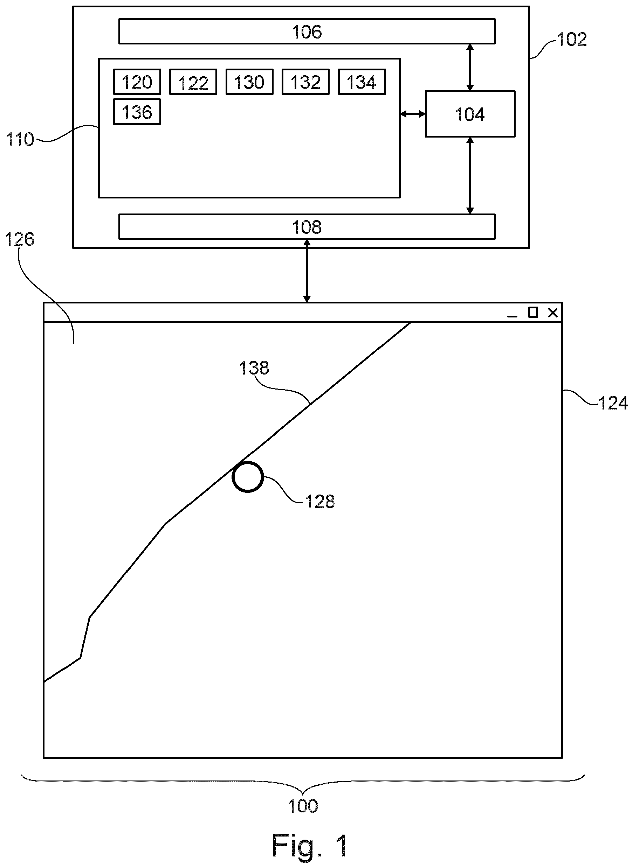

Fig. 1 illustrates an example of a medical system 100. The medical system 100 depicted in Fig. 1 is shown as comprising a computer 102. The computer 102 is intended to represent one or more computers at one or more locations. The computer 102 is shown as comprising a computational system 104. The computational system 104 is intended to represent one or more computational systems or computing cores located at one or more locations. The computational system 104 is connected to an optional hardware interface 106. If the medical system 100 comprises additional components the hardware interface 106 may be used by the computational system 104 to exchange data with it and/or control it. The computational system 104 is further shown as being in communication with a user interface 108 and a memory 110. The memory 110 is intended to represent one or more memories that are in communication or are accessible to the computational system 104.

The memory 110 is shown as storing machine-executable instructions 120. The machine-executable instructions 120 enable the computational system 104 to perform various control, computational, and data manipulation tasks. The memory 110 is further shown as containing a three-dimensional medical image 122.

The user interface 108 is shown as comprising a graphical user interface 124. The graphical user interface 124 is showing a cross-sectional view 126 of the three-dimensional medical image 122. The graphical user interface 124 has a segmentation entry tool 128 which is used to enter segmentation edit data 132 to provide for a segmentation 136 of the three-dimensional medical image 122. The segmentation 136 is shown as being stored in the memory 110 and there is a rendering of a portion 138 of the segmentation 136 in the graphical user interface 124. The operator is able to use the segmentation entry tool 128 to manipulate and additionally edit the segmentation 136.

The memory 110 is further shown as containing tool configuration parameters 130. The tool configuration parameters 130 control the behavior and additional properties of the segmentation entry tool 128. When using the segmentation entry tool 128 the operator is able to enter segmentation edit data 132, which is used to construct and/or modify the segmentation 136. In the process of using the segmentation entry tool 128 tool use metadata 134 is generated. This may provide such things as the speed at which the segmentation entry tool 128 is moved in the cross-sectional view 126 as well as other things such as image properties of the cross-sectional view 126 or other configuration parameters.

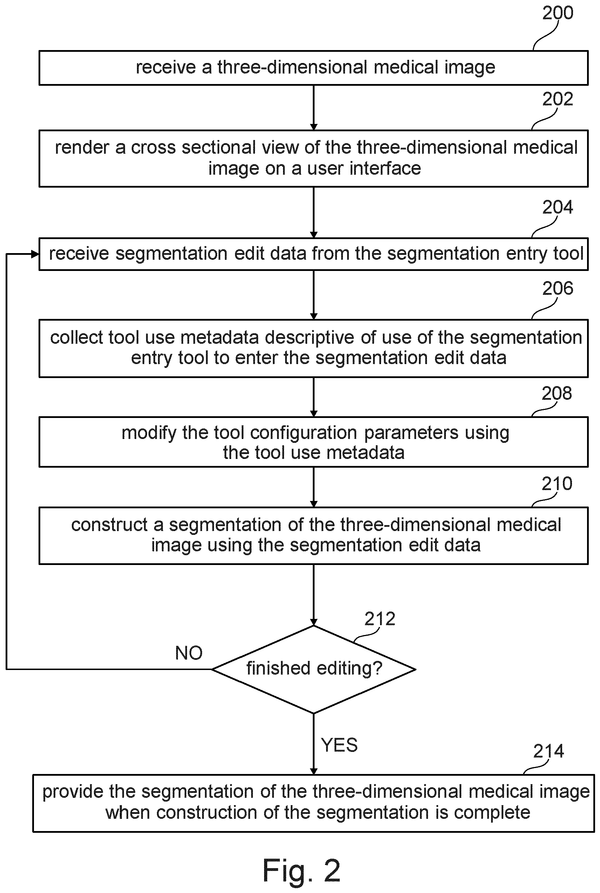

Fig. 2 shows a flowchart which illustrates a method of operating the medical system 100 of Fig. 1. In step 200, the three-dimensional medical system 122 is received. In step 202, the cross-sectional view 126 of the three-dimensional medical system 122 is rendered on the user interface 108; in this case the graphical user interface 124. In step 204, the operator manipulates the segmentation entry tool 128 causing this to generate segmentation edit data 132. In step 206, the tool use metadata 134 is collected as the segmentation edit data 132 is generated. In step 208, the tool configuration parameters 130 are modified using the tool use metadata 134. This may be done algorithmically or with a neural network as is described below. In step 210, the segmentation 136 is constructed or edited using the segmentation edit data 132. Step 212 is a question box, the question is, is the editing of the segmentation finished. If the answer is no, the method proceeds back to steps 204, where steps 204, 206, 208 and 210 are performed in a loop until the editing of the segmentation 136 is finished. The exact order of steps 204, 206, 208, and 210 is not fixed and not all of these steps need to be performed during every loop.

In box 212, if the editing is finished, the method proceeds to block 214, where the segmentation 136 of the three-dimensional medical system 122 is provided. In some instances the segmentation may be stored with the three-dimensional medical image 122. In some examples the segmentation 136 may be superimposed and displayed with the three-dimensional medical system 122. In other instances, the segmentation 136 may be provided for other uses such as radiation therapy planning.

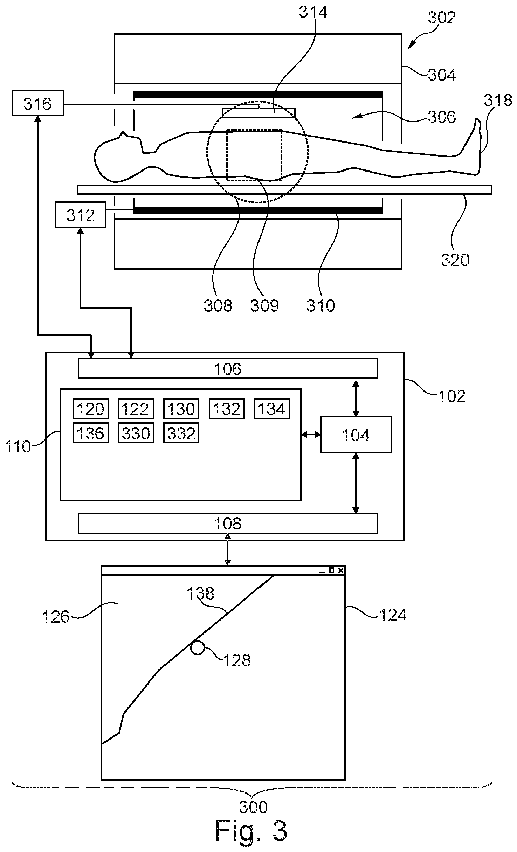

Fig. 3 illustrates a further example of a medical system 300. In Fig. 3 the medical system 300 additionally comprises a magnetic resonance imaging system 302. The magnetic resonance imaging system 302 is intended to be representative of medical imaging systems in general. The magnetic resonance imaging system 302 could for example be replaced with a computed tomography system, a three-dimensional ultrasound system, a single-photon emission tomography system, or a positron emission tomography system.

The medical system 300 illustrated in Fig. 3 is further shown as comprising a magnetic resonance imaging system 302. The magnetic resonance imaging system 302 comprises a magnet 304. The magnet 304 is a superconducting cylindrical type magnet with a bore 306 through it. The use of different types of magnets is also possible; for instance it is also possible to use both a split cylindrical magnet and a so called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject: the arrangement of the two sections area similar to that of a Helmholtz coil. Open magnets are popular, because the subject is less confined. Inside the cryostat of the cylindrical magnet there is a collection of superconducting coils.

Within the bore 306 of the cylindrical magnet 304 there is an imaging zone 308 where the magnetic field is strong and uniform enough to perform magnetic resonance imaging. A field of view 309 is shown within the imaging zone 308. The k-space data that is acquired typically acquried for the field of view 309. The region of interest could be identical with the field of view 309 or it could be a sub volume of the field of view 309. A subject 318 is shown as being supported by a subject support 320 such that at least a portion of the subject 318 is within the imaging zone 308 and the field of view 309.

Within the bore 306 of the magnet there is also a set of magnetic field gradient coils 310 which is used for acquisition of preliminary k-space data to spatially encode magnetic spins within the imaging zone 308 of the magnet 304. The magnetic field gradient coils 310 connected to a magnetic field gradient coil power supply 312. The magnetic field gradient coils 310 are intended to be representative. Typically magnetic field gradient coils 310 contain three separate sets of coils for spatially encoding in three orthogonal spatial directions. A magnetic field gradient power supply supplies current to the magnetic field gradient coils. The current supplied to the magnetic field gradient coils 310 is controlled as a function of time and may be ramped or pulsed.

Adjacent to the imaging zone 308 is a radio-frequency coil 314 for manipulating the orientations of magnetic spins within the imaging zone 308 and for receiving radio transmissions from spins also within the imaging zone 308. The radio frequency antenna may contain multiple coil elements. The radio frequency antenna may also be referred to as a channel or antenna. The radio-frequency coil 314 is connected to a radio frequency transceiver 316. The radio-frequency coil 314 and radio frequency transceiver 316 may be replaced by separate transmit and receive coils and a separate transmitter and receiver. It is understood that the radio-frequency coil 314 and the radio frequency transceiver 316 are representative. The radio-frequency coil 314 is intended to also represent a dedicated transmit antenna and a dedicated receive antenna. Likewise the transceiver 316 may also represent a separate transmitter and receivers. The radio-frequency coil 314 may also have multiple receive/transmit elements and the radio frequency transceiver 316 may have multiple receive/transmit channels.

The transceiver 316 and the gradient controller 312 are shown as being connected to the hardware interface 106 of the computer system 102.

The memory 110 is again shown as containing the machine-executable instructions 120 and the image processing neural network 122. The memory 110 is shown as additionally containing the pulse sequence commands 330. The pulse sequence command 330 are commands or data which may be converted into commands to control the magnetic resonance imaging system 302 to acquire k-space data 332 according to a three-dimensional medical magnetic resonance imaging protocol. The memory 110 is shown as containing k-space data 332 that has been acquired by controlling the magnetic resonance imaging system 302 with the pulse sequence commands 330. The three-dimensional medical image 122, in this example, is reconstructed from the k-space data 332.

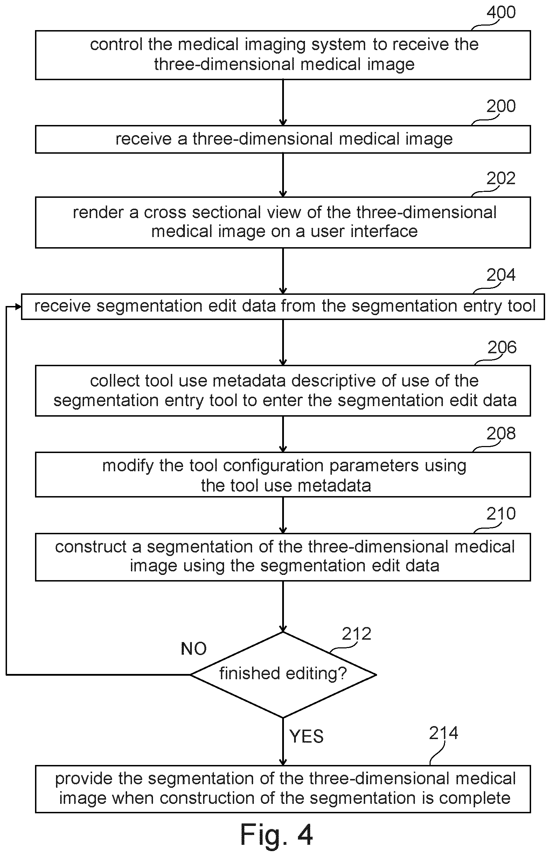

Fig. 4 shows a flowchart which illustrates a method of operating the medical system 300 of Fig. 3. In block 400 the medical imaging system, which in this case is a magnetic resonance imaging system 302, is controlled to receive the three-dimensional medical image 122. This may be achieved for example by controlling the magnetic resonance imaging system 302 with the pulse sequence commands 330. This causes the magnetic resonance imaging system 302 to acquire k-space data 332. The k-space data 332 may be reconstructed into a magnetic resonance image or, in this case, the three-dimensional medical system 122.

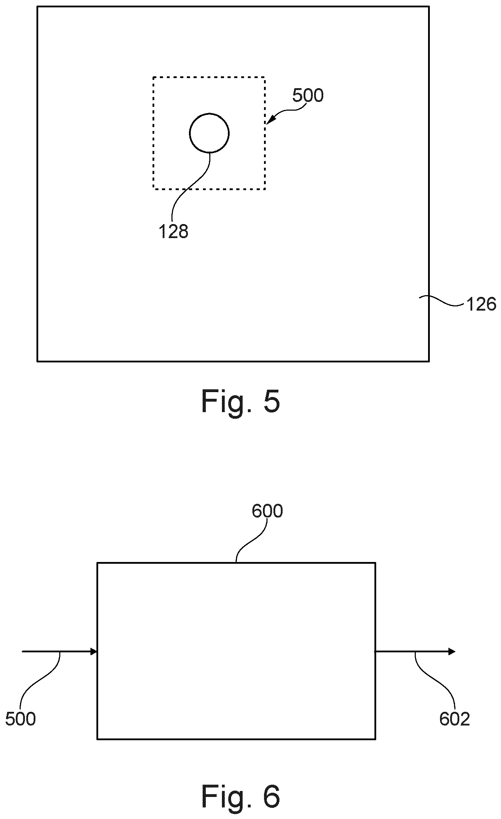

Fig. 5 illustrates the construction of a sub-image 500 from the cross-sectional view 126. Fig. 5 illustrates a portion of the graphical user interface 124. The segmentation entry tool 128 has a box oriented around it. This box, 500, is a region which is used to select a sub-image 500 from the cross-sectional view 126. As the sub-image 500 is centered around the segmentation entry tool 128, the image in the sub-image 500 is descriptive of the area which is currently being edited by the segmentation entry tool 128. This sub-image 500 could for example be inserted into an edge detection algorithm to determine the edge density within a predetermined edge detection distance from the segmentation entry tool. In other examples, this sub-image may be inserted into an image processing neural network.

Fig. 6 illustrates an example of an image processing neural network 600. The image processing neural network 600 is configured to receive the sub-image 500 as input. It has then been trained to output a tool size prediction 602. For example, the tool size prediction 602 may be encoded by the output of the image processing neural network 600. As the segmentation entry tool 128 is moved throughout the cross-sectional view 126, the sub-image 500 surrounding the segmentation entry tool 128 can be continuously or repeatedly input into the image processing neural network 600 to provide the tool size prediction 602 on a more or less continuous basis. This enables continual or repetitive adjustment of the tool size of the segmentation entry tool.

When the tool size changes, this may have an effect on the editing of the segmentation 136. For example, if the tool size decreases the tool will no longer be in contact with the segmentation 136. If the tool size increases this may for example cause the segmentation to distort in an unwanted way.

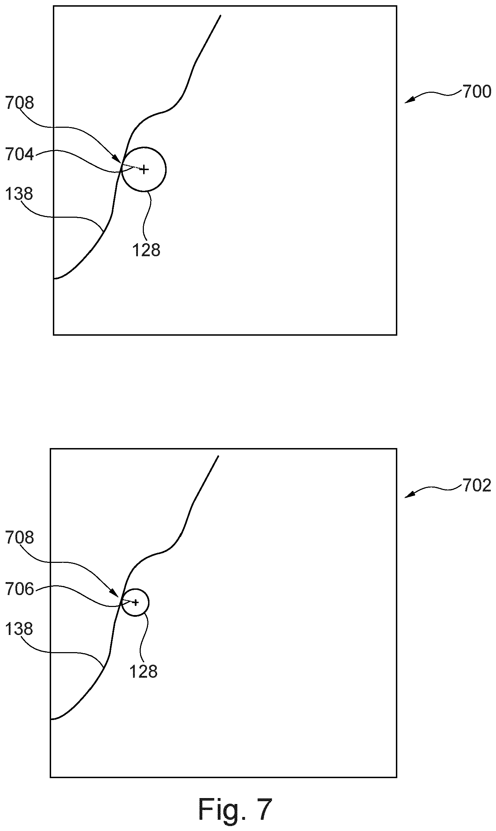

Fig. 7 illustrates how these problems may be reduced or eliminated. There are two views shown, one which is before a size change and a second view which shows the size after the change 702. In both Figs. the cross-sectional view 126 of the three-dimensional medical system 122 are shown. The rendering of the segmentation 138 is also shown. In the first view 700, the segmentation entry tool 128 is larger and is shown as being a first distance 704, from the rendering of the segmentation 138. In the second view 702, the size of the segmentation entry tool 128 has been decreased. However, the segmentation entry tool 128 was moved closer to the rendering of the segmentation 138 automatically. The center of the segmentation entry tool 128 in the second view 702 is shown as being a second distance 706, which is smaller than the first distance 704 in the first view 700. In both views 700, 702 the segmentation entry tool 128 maintains the same point of contract 708 before and after the size change.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A `computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

`Computer memory' or 'memory' is an example of a computer-readable storage medium. Computer memory is any memory which is directly accessible to a computational system. `Computer storage' or 'storage' is a further example of a computer-readable storage medium. Computer storage is any non-volatile computer-readable storage medium. In some embodiments computer storage may also be computer memory or vice versa.

A `computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A `user interface' as used herein is an interface which allows a user or operator to interact with a computer or computer system. A `user interface' may also be referred to as a `human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A `hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or `display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen,

Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: medical system
- 102: computer
- 104: computational system
- 106: optional hardware interface
- 108: user interface
- 110: memory
- 120: machine executable instructions
- 122: three-dimensional medical image
- 124: graphical user interface
- 126: cross sectional view
- 128: segmentation entry tool
- 130: tool configuration parameters
- 132: segmentation edit data
- 134: tool use metadata
- 136: segmentation
- 138: rendering of segmentation
- 200: receive a three-dimensional medical image
- 202: render a cross sectional view of the three-dimensional medical image on a user interface
- 204: receive segmentation edit data from the segmentation entry tool
- 206: collect tool use metadata descriptive of use of the segmentation entry tool to enter the segmentation edit data
- 208: modify the tool configuration parameters using the tool use metadata
- 210: construct a segmentation of the three-dimensional medical image using the segmentation edit data
- 212: finished editing?
- 214: provide the segmentation of the three-dimensional medical image when construction of the segmentation is complete
- 300: medical system
- 302: magnetic resonance imaging system
- 304: magnet
- 306: bore of magnet
- 308: imaging zone
- 309: field of view
- 310: magnetic field gradient coils
- 312: magnetic field gradient coil power supply
- 314: radio-frequency coil
- 316: transceiver
- 318: subject
- 320: subject support
- 330: pulse sequence commands
- 332: k-space data
- 400: control the medical imaging system to receive the three-dimensional medical image
- 500: sub-image
- 600: image processing neural network
- 602: tool size prediction
- 700: before size change
- 702: after size change
- 704: first distance
- 706: second distance
- 708: point of contact

## Claims

1. A medical system (100, 300) comprising:
- a memory (110) storing machine executable instructions (120);
- a computational system (104), wherein execution of the machine executable instructions causes the computational system to:
- receive (200) a three-dimensional medical image (122);
- render (202) a cross sectional view (126) of the three-dimensional medical image on a user interface (124), wherein the user interface comprises a segmentation entry tool (128);
wherein execution of the machine executable instructions further causes the computational system to repeatedly:
- receive (204) segmentation edit data (132) from the segmentation entry tool, wherein the segmentation entry tool comprises tool configuration parameters (130) configured to control how the segmentation entry tool generates segmentation edit data;
- collect (206) tool use metadata (134) descriptive of use of the segmentation entry tool to enter the segmentation edit data;
- modify (208) the tool configuration parameters (130) using the tool use metadata; and
- construct (210) a segmentation (136) of the three-dimensional medical image using the segmentation edit data.

2. The medical system of claim 1, wherein the tool configuration parameters comprise a tool size.

3. The medical system of claim 2, wherein the memory further stores an edge detection algorithm, wherein execution of the machine executable instructions further causes the computational system to:
- determine an edge density within the cross-sectional view within a predetermined edge detection distance from the segmentation entry tool using the edge detection algorithm, wherein the tool use metadata comprises the edge density; and
- adjust the tool size proportional to a change in the edge density as the segmentation entry tool is moved through the cross-sectional view.

4. The medical system of claim 2, wherein the memory further stores an image processing neural network (600), wherein the image processing neural network is configured to output a tool size prediction in response to receiving a sub-image (500) selected from the cross-sectional view,
wherein execution of the machine executable instructions further causes the computational system to:
- generate the sub image by selecting a region of the cross-sectional view that is located within a predetermined distance of the location of the segmentation entry tool within the cross-sectional view;
- receive the tool size prediction in response to inputting the sub image into the image processing neural network; and
- modify the tool configuration parameters such that the tool size is set to the tool size prediction.

5. The medical system of claim 2, 3, or 4, wherein the tool use metadata comprises a segmentation tool speed, wherein execution of the machine executable instructions further causes the computational system to: adjust the tool size such that changes in tool size are proportional to changes in the segmentation tool speed and/or automatically smooth the segmentation when the segmentation tool speed is above a predetermined threshold.

6. The medical system of any one of the preceding claims, wherein
execution of the machine executable instructions further causes the computational system to:
- detect repetitive motion of the segmentation entry tool using the tool use metadata; and
- increase the size of the segmentation entry tool in response to detecting the repetitive motion of the segmentation entry tool.

7. The medical system of any one of claims 2 through 6, wherein the segmentation is a three-dimensional mesh, wherein the segmentation entry tool is configured to perform any one of the following: push the three-dimensional mesh, distort the three-dimensional mesh, draw points in the three-dimensional mesh, and combinations thereof.

8. The medical system of claim 7, wherein execution of the machine executable instructions further causes the computational system to adjust a location of the segmentation entry tool such that the segmentation entry tool remains in contact (708) with the three-dimensional mesh when the tool sized is changed.

9. The medical system of any one of the preceding claims, wherein the tool configuration parameters comprise any one of the following: a distance perpendicular to the cross-sectional view for which segmentation edit data is generated, a tool type, a ball size, a live-wire diameter, a point annotation size, an interactive region growing size, and combinations thereof.

10. The medical system of any one of the preceding claims, wherein the memory further stores a tool configuration neural network configured to output the tool configuration parameter modifications in response to receiving the tool use metadata as input; wherein execution of the machine executable instructions further causes the computational system to:
- receive the tool configuration parameter modifications in response to inputting the tool use metadata into the tool configuration neural network; and
- modify the tool configuration parameters using the tool configuration parameter modifications;

11. The medical system of claim 10, wherein execution of the machine executable instructions further causes the computational system to:
- record manual tool configuration parameter modifications and the tool use metadata for an operator of the medical system; and
- train the tool configuration neural network using the manual tool configuration parameter modifications and the tool use metadata to provide a user specific tool configuration neural network.

12. The medical system of any one of the preceding claims, wherein the medical imaging system further comprises a medical imaging system (302) configured for imaging at least a portion of a subject, wherein execution of the machine executable instructions further causes the computational system to control the medical imaging system to acquire the three-dimensional medical image.

13. The medical system of any one of the preceding claims, wherein the three-dimensional medical image is any one of the following: a magnetic resonance image, a computed tomography image, a three-dimensional ultrasound image, a positron emission tomography image, and a single photon emission tomography image.

14. A computer program comprising machine executable instructions (120) for execution by a computational system (120), wherein execution of the machine executable instructions causes the computational system to:
- receive (200) a three-dimensional medical image (122);
- render (202) a cross sectional view (126) of the three-dimensional medical image on a user interface (124), wherein the user interface comprises a segmentation entry tool (128);
wherein execution of the machine executable instructions further causes the computational system to repeatedly:
- receive (204) segmentation edit data (132) from the segmentation entry tool, wherein the segmentation entry tool comprises tool configuration parameters (130) configured to control how the segmentation entry tool generates segmentation edit data;
- collect (206) tool use metadata (134) descriptive of use of the segmentation entry tool to enter the segmentation edit data;
- modify (208) the tool configuration parameters (130) using the tool use metadata; and
- construct (210) a segmentation (136) of the three-dimensional medical image using the segmentation edit data.

15. A method, wherein the method comprises:
- receiving (200) a three-dimensional medical image (122);
- rendering (202) a cross sectional view (126) of the three-dimensional medical image on a user interface (124), wherein the user interface comprises a segmentation entry tool (128);
wherein execution of the machine executable instructions further causes the computational system to repeatedly:
- receiving (204) segmentation edit data (132) from the segmentation entry tool, wherein the segmentation entry tool comprises tool configuration parameters (130) configured to control how the segmentation entry tool generates segmentation edit data;
- collecting (206) tool use metadata (134) descriptive of use of the segmentation entry tool to enter the segmentation edit data;
- modifying (208) the tool configuration parameters using the tool use metadata; and
- constructing (210) a segmentation (136) of the three-dimensional medical image using the segmentation edit data.
